Europäisches Patentamt

European Patent Office

Office européen des brevets

(19)

(11) **EP 0 626 572 B1**

(12) **FASCICULE DE BREVET EUROPEEN**

(45) Date de publication et mention
de la délivrance du brevet:
**02.02.2000 Bulletin 2000/05**

(51) Int Cl.⁷: **G01L 19/06**, G01L 9/06,
G01N 9/26

(21) Numéro de dépôt: **94401054.5**

(22) Date de dépôt: **11.05.1994**

(54) **Capteur de pression à membrane comportant un système de protection anti-choc, et gradiomanomètre incorporant un tel capteur**

Membran-Druckwandler mit einer Stossschutzvorrichtung und Dichtemessgerät mit einem solchen Wandler

Diaphragm pressure transducer comprising a shock protective system, and gradiomanometer incorporating such a transducer

(84) Etats contractants désignés:
**CH DE DK GB LI NL**

(30) Priorité: **25.05.1993 FR 9306185**

(43) Date de publication de la demande:
**30.11.1994 Bulletin 1994/48**

(73) Titulaires:
• **SCHLUMBERGER LIMITED**
**New York, N.Y. 10172 (US)**
Etats contractants désignés:
**GB**
• **SCHLUMBERGER TECHNOLOGY B.V.**
**NL-2517 KM Den Haag (NL)**
Etats contractants désignés:
**DE DK**
• **SCHLUMBERGER HOLDINGS LIMITED**
**Road Town, Tortola (VG)**
Etats contractants désignés:
**CH LI NL**

(72) Inventeurs:
• **Rezgui, Fadhel**
**F-92330 Sceaux (FR)**
• **Donzier, Eric**
**F-77115 Blandy les Tours (FR)**

(74) Mandataire: **Hagel, Francis et al**
**ETUDES ET PRODUCTIONS SCHLUMBERGER**
**Service Brevets**
**B.P. 202**
**92142 Clamart Cédex (FR)**

(56) Documents cités:
EP-A- 0 045 011          DE-A- 2 712 846
US-A- 4 452 069          US-A- 4 637 000

## EP 0 626 572 B1

**Description**

L'invention concerne un capteur de pression à membrane déformable, dans lequel est intégré un système de protection anti-choc. L'invention a aussi pour objet un gradiomanomètre incorporant un tel capteur.

Le capteur de pression conforme à l'invention peut être utilisé dans tous les cas où l'utilisation d'un capteur, et notamment sa manutention, implique un risque élevé de chocs pouvant conduire à un éclatement de la membrane déformable. Les applications concernées par ce risque sont notamment les applications pétrolières, dans lesquelles les manutentions effectuées notamment en tête de puits entraînent fréquemment des chutes des tiges et des outils que l'on introduit dans le puits. Ainsi, un capteur de pression différentiel conforme à l'invention peut être utilisé dans les gradiomanomètres servant à mesurer la densité du fluide présent dans les puits de forage pétrolier, ainsi que dans des appareils permettant de mesurer la vitesse de déplacement d'un fluide.

Pour effectuer des mesures de pression dans les puits de forage pétrolier, il est connu d'utiliser des capteurs de pression dont l'élément sensible est constitué par une membrane apte à se déformer lorsqu'une très faible différence de pression existe de part et d'autre de cette membrane. La mesure de la déformation de la membrane est faite au moyen d'un pont de jauges piézorésistives associé à la membrane.

Dans la demande de brevet français n° FR-A-93 04228, on a proposé un capteur de pression de très grande sensibilité, utilisant une membrane en silicium de très faible épaisseur (par exemple, environ 30 μm), sur laquelle le pont de jauges est formé en utilisant des technologies comparables à celles qui sont utilisées en micro-électronique.

Dans un tel capteur de pression, la membrane déformable obture de façon étanche un passage contenant un liquide tel que de l'huile silicone, de densité connue, qui transmet intégralement à la membrane les pressions régnant aux deux extrémités du passage. La membrane se trouve donc chargée par une colonne de fluide d'une certaine hauteur, ce qui se traduit par une pression appliquée sur cette même membrane.

Lorsque l'outil dans lequel se trouve le capteur de pression subit un choc, par exemple en raison d'une chute de quelques centimètres de cet outil, la colonne de fluide est accélérée, ce qui se traduit par l'application sur la membrane d'un pic de pression de la durée du choc (de l'ordre de quelques μs à quelques ms) et dont l'amplitude dépend de la hauteur de chute et de la durée du choc. Ainsi, une chute de 10 cm sur un sol compact (béton par exemple) se traduit, sur une membrane chargée par une colonne de 0,5 m, par un pic de pression de 10 bars pendant quelques dixièmes de milliseconde.

Compte tenu de la gamme de mesure de la membrane (quelques dixièmes de bar), on comprend que dans pareilles situations la membrane soit détruite. Compte tenu des conditions de manutention en tête de puits, cette fragilité aux chocs des capteurs de pression existants se traduit par un accroissement considérable du coût des mesures effectuées à l'aide de tels capteurs, qui ne peuvent en moyenne être utilisés sans être souvent endommagés de façon irréversible.

Le document US-A-3 616 688 décrit un gradiomanomètre destiné à un puits de forage pétrolier. Pour détecter la pression différentielle entre deux points séparés par une distance verticale connue, on utilise un équipage mobile verticalement à l'intérieur d'un corps tubulaire placé dans un puits de forage. Cet équipage mobile est rempli de liquide et comprend deux soufflets déformables reliés par un tube rigide. La position verticale de l'équipage mobile à l'intérieur du corps tubulaire est fonction de la différence de pression statique exercée par le fluide présent dans le puits sur chacun des deux soufflets. La pression différentielle est donc déterminée en mesurant la position de l'équipage mobile dans le corps tubulaire. Une chambre d'expansion délimitée par un troisième soufflet communique par une restriction avec le soufflet inférieur, afin d'absorber les variations de volume du liquide contenu dans l'équipage mobile sans influencer le fonctionnement dynamique de cet équipage mobile.

Le dispositif décrit dans le document US-A-3 616 688 est également sensible aux chocs. En effet, la pression considérable qui est alors appliquée sur le soufflet inférieur de l'équipage mobile risque de déformer ce soufflet de manière permanente et de fausser les mesures effectuées ultérieurement. Dans ce document, il est proposé de résoudre ce problème en montant, en parallèle sur la restriction qui relie le soufflet inférieur de l'équipage mobile au soufflet de la chambre d'expansion, une soupape normalement fermée et dont l'ouverture se produit automatiquement lorsqu'un pic d'accélération vers le bas, consécutif à un choc, est appliqué sur l'appareil.

Compte tenu de la nature totalement différente des capteurs de pression, la solution proposée dans le document US-A-3 616 688 n'est évidemment pas transposable à un capteur de pression à membrane déformable.

L'invention a précisément pour objet un capteur de pression à membrane déformable dont la conception originale lui permette de supporter des chocs relativement importants sans que ces chocs se traduisent par un éclatement de la membrane ou par un endommagement quelconque du capteur.

Conformément à l'invention, ce résultat est obtenu au moyen d'un capteur de pression comprenant une membrane déformable obturant de façon étanche un passage de fluide, et des moyens de mesure d'une déformation de la membrane, caractérisé par le fait que le passage comprend une restriction définie de manière à former avec la membrane un filtre passe-bas ayant une fréquence de coupure déterminée.

La présence d'une restriction dans le passage contenant le fluide qui applique la pression sur la membrane déformable a pour conséquence un amortissement de l'onde de pression au niveau de la membrane. La pression résiduelle transmise à la membrane déformable reste limitée à une valeur suffisamment faible pour que l'intégrité de la membrane reste préservée. Cet amortissement dépend des dimensions géométriques de la restriction et de la membrane ainsi que de la viscosité du fluide.

De façon plus précise, si les dimensions de la restriction sont rapportées à celles d'un trou circulaire de rayon $r_c$ (en mm) et de longueur $\ell$ (en mm), elles satisfont avantageusement l'équation :

$$\frac{r_c^4}{\ell} = \frac{2.n.r_s^6.f_0}{E.e^3}$$

où :

- $n$ est la viscosité du fluide à température ambiante (en Pa.s) ;
- $r_s$ est le rayon utile de la membrane (en mm) ;
- $f_0$ est la fréquence de coupure (en Hz) adoptée pour le capteur ;
- $E$ est le module d'Young (en Pa) de la membrane ; et
- $e$ est l'épaisseur de la membrane (en mm).

Afin de garantir le fonctionnement du capteur dans des conditions normales de déplacement de celui-ci à l'intérieur d'un puits de forage tout en évitant à coup sûr un éclatement de la membrane en cas de choc, la fréquence de coupure $f_0$ est comprise entre une fréquence maximale de fonctionnement normale du capteur et une fréquence maximale mécaniquement admissible pour la membrane. Ainsi, la fréquence de coupure peut être au plus égale à 100 Hz et, par exemple, voisine de 10 Hz à température ambiante.

Dans une forme de réalisation préférentielle de l'invention, la membrane déformable est montée dans un support tubulaire rigide qui délimite intérieurement une section dudit passage, dans laquelle est formée la restriction.

La restriction peut notamment être formée par un tube capillaire démontable monté dans ladite section du passage. Cet agencement permet d'intervenir soit pour déboucher le tube capillaire, soit pour le remplacer. Cependant, les conditions de fabrication du tube capillaire limitent la section de la restriction à une valeur minimale.

Dans le cas où le support tubulaire rigide présente une face radiale sur laquelle la membrane déformable est fixée, directement ou par l'intermédiaire d'une pièce de découplage présentant une ouverture centrale qui communique avec la section précitée du passage, la restriction peut être réalisée sous la forme d'une ou plusieures rainures. La ou les rainures peuvent être pratiquées dans une plaquette fixée soit sur la face radiale du support, soit sur la partie centrale de la pièce de découplage, lorsque cette pièce existe. La ou les rainures peuvent aussi être pratiquées directement sur la face radiale du support ou sur la partie centrale de la pièce de découplage. Elles mettent en communication le passage traversant le support tubulaire avec un bord périphérique de la plaquette. Dans ce cas, la restriction n'est pas démontable mais il est possible de fabriquer des restrictions de dimensions très précises et dont la section ne présente pratiquement pas de limite inférieure. En effet, la membrane déformable, la pièce de découplage, lorsqu'elle existe, ainsi que la plaquette peuvent être réalisées en silicium, la ou les rainures formant la restriction étant obtenues en utilisant des technologies comparables à celles qui sont utilisées en micro-électronique.

Compte tenu des avantages et des inconvénients des deux solutions proposées, on utilisera de préférence un tube capillaire démontable lorsque le diamètre de la restriction est suffisamment important pour permettre son usinage par des techniques traditionnelles. Dans le cas contraire, la restriction sera obtenue au moyen d'une ou plusieurs rainures formées dans une plaquette, conformément à la deuxième solution proposée ci-dessus.

On décrira à présent, à titre d'exemples non limitatifs, deux formes de réalisation de l'invention, en se référant aux dessins annexés, dans lesquels :

- la figure 1 est une vue en coupe longitudinale schématique d'un gradiomanomètre placé dans un puits de forage pétrolier, afin d'y effectuer des mesures de densité ;
- la figure 2 est une vue en coupe verticale d'un capteur de pression différentielle utilisé dans le gradiomanomètre de la figure 1 et réalisé selon une première forme de réalisation de l'invention ;
- la figure 3 est une vue comparable à la figure 2 représentant un capteur de pression différentielle selon une deuxième forme de réalisation de l'invention ; et
- la figure 4 est une vue en perspective agrandie montrant les rainures réalisées sur la face inférieure d'une plaquette incorporée dans le capteur de la figure 3, pour former une restriction.

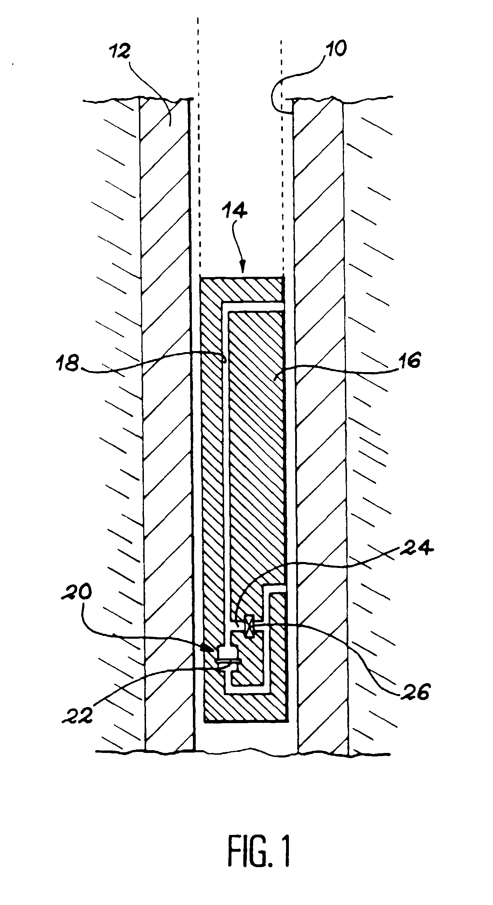

Sur la figure 1, on a représenté un tronçon de puits de forage pétrolier 10 délimité par un cuvelage 12. Afin

**3**

que l'exploitation du puits puisse se faire dans les meilleures conditions, on a besoin de distinguer, à l'intérieur du puits 10, les régions contenant de l'eau, de celles qui contiennent du pétrole à l'état liquide et de celles qui contiennent du pétrole à l'état gazeux.

Pour effectuer cette distinction, on descend dans le puits 10 un gradiomanomètre 14 permettant de mesurer sur toute la hauteur du puits parcourue par cet appareil la densité du fluide présent dans le puits. Ce gradiomanomètre 14 est suspendu à un câble (non illustré sur la figure 1) qui assure sa descente, puis sa remontée, ainsi que la transmission jusqu'à la surface des signaux représentatifs de la densité du fluide, qui sont émis par cet appareil.

Le gradiomanomètre 14 comprend un corps cylindrique 16 dans lequel est formé un passage 18 rempli d'un liquide de référence, tel que de l'huile silicone, de densité connue. Les extrémités du passage 18 débouchent à deux niveaux différents sur le corps 16. La différence entre ces niveaux correspond à une hauteur h connue, par exemple d'environ 0,50 m.

Un capteur de pression différentielle 20 est placé dans le passage 18. Ce capteur comporte une membrane déformable 22 qui obture de façon étanche le passage 18 et maintient en place le liquide dans ce dernier, conjointement avec la pression qui règne dans le puits autour du gradiomanomètre 14. La valeur de cette pression varie selon la profondeur à laquelle se trouve l'appareil mais peut atteindre environ 1000 bars.

si l'on désigne par $\rho_0$ la densité du liquide de référence présent dans le passage 18 et par $\rho_x$ la densité du fluide présent dans le puits au niveau où se trouve le gradiomanomètre 14, la membrane 22 du capteur de pression différentielle 20 est soumise à une différence de pression $\Delta P$ donnée par la formule :

$$\Delta P = (\rho_0 - \rho_x).g.h.\cos.\Theta$$

où :

- g représente le module du champ de gravité local ; et
- $\Theta$ l'angle d'inclinaison du puits par rapport à la verticale.

Cette formule fait apparaître clairement que la différence de pression vue par la membrane 22 du capteur 20 est représentative de la densité $\rho_x$ du fluide présent dans le puits.

De préférence, le gradiomanomètre 14 comprend de plus, à l'intérieur du corps 16, un conduit de dérivation 24 raccordé sur le passage 18 en amont et en aval du capteur de pression 20. Un clapet 26, normalement fermé, est placé dans le conduit de dérivation 24. Ce clapet 26 est prévu pour s'ouvrir sous l'effet d'un choc, afin d'éviter que la membrane 22 ne soit endommagée. Toutefois, son temps de réponse est relativement long, de telle sorte qu'il ne remplit que très imparfaitement ce rôle et n'empêche pratiquement pas l'éclatement de la membrane 22 en cas de choc dans les capteurs de pression différentielle de conception classique.

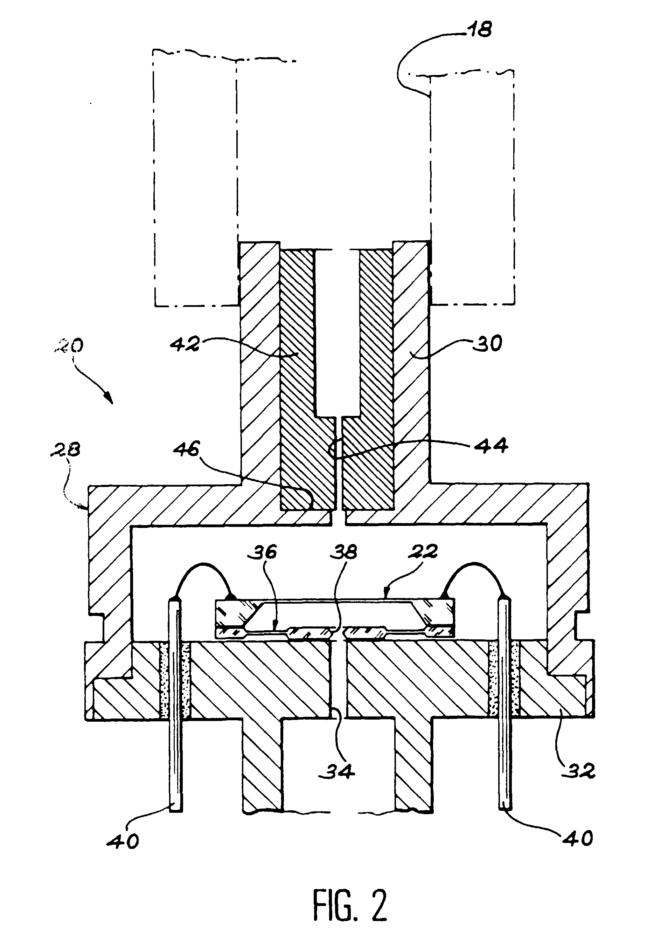

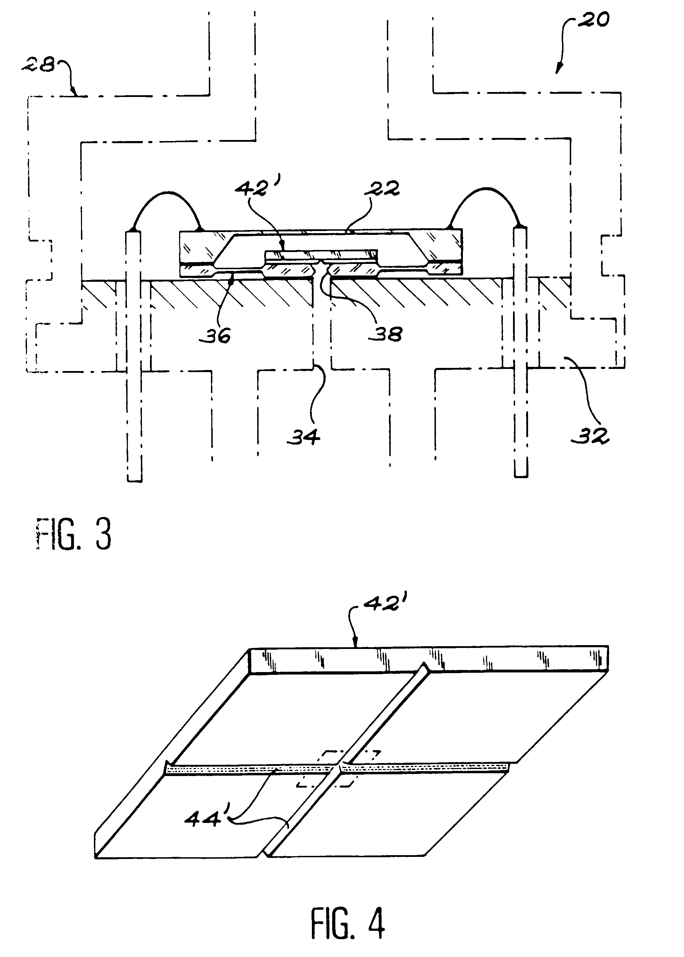

Pour remédier à cet inconvénient et assurer une protection efficace de la membrane 22 du capteur, il est proposé, conformément à l'invention, d'équiper ce capteur d'un système de protection anti-choc intégré susceptible de prendre différentes formes dont deux exemples vont être décrits successivement en se référant tout d'abord à la figure 2, puis aux figures 3 et 4.

Dans la forme de réalisation illustrée sur la figure 2, le capteur de pression différentielle 20 comprend un support tubulaire rigide 28 formé par l'assemblage étanche d'une pièce tubulaire 30, et d'une pièce 32 en forme de disque. Plus précisément, la pièce tubulaire 30 comprenant une section de relativement petit diamètre et une section de relativement grand diamètre, et la pièce 32 en forme de disque est raccordée de façon étanche sur la section de relativement grand diamètre de la pièce tubulaire 30. Les pièces 30 et 32 formant le support tubulaire rigide 28 peuvent notamment être réalisées en un matériau tel que du "Kovar" (Marque déposée).

Le support tubulaire rigide 28 est monté de façon étanche dans le passage 18, de façon à délimiter intérieurement une section de ce passage. A cet effet, la pièce 32 en forme de disque est traversée en son centre par un trou circulaire 34. Le montage du support tubulaire rigide 28 est avantageusement réalisé de façon démontable, pour permettre le remplacement du capteur de pression différentielle 20, lorsque cela s'avère nécessaire.

La pièce 32 en forme de disque comporte une face plane tournée vers la pièce tubulaire 30 et orientée perpendiculairement à l'axe du passage 18. La membrane déformable 22 du capteur est fixée de façon étanche sur cette face plane de la pièce 32. De façon plus précise, la face plane de la pièce 32 en forme de disque supporte la membrane déformable 22 par l'intermédiaire d'une pièce de découplage 36.

La pièce de découplage 36 est une plaque mince et plane, par exemple de forme carrée, avantageusement réalisée en silicium selon des techniques semblables à celles qui sont utilisées habituellement en micro-électronique (oxydation, photo lithographie, micro-usinage anisotrope, etc.). Cette pièce de découplage 36 présente une ouverture centrale 38 placée dans le prolongement du trou 34. Sa partie centrale adjacente à l'ouverture 38 est collée sur la face supérieure de la pièce 32 en forme de disque.

La membrane déformable 22 est également réalisée avantageusement à partir d'une plaquette de silicium en utilisant les techniques de micro-usinage habituellement mises en oeuvre dans le domaine de la micro-électronique. Elle se présente sous la forme d'une plaque plane et carrée dont les dimensions extérieures sont identiques à celles de la pièce de découplage 36.

La membrane déformable 22 est fixée de façon étanche sur la pièce de découplage 36 par collage de la région périphérique de la membrane sur la zone périphérique adjacente de la pièce de découplage.

Pour détecter et mesurer les déformations de la membrane déformable 22, on utilise des moyens de mesure comprenant un pont de jauges piézorésistives (non représenté) formé, par exemple, sur la face supérieure de la membrane 22. Ce pont de jauges piézorésistives peut être obtenu lors de la fabrication de la membrane déformable, en mettant en oeuvre les techniques classiques de la micro-électronique. Il comprend quatre résistances disposées deux à deux selon deux directions orthogonales, ainsi que des liaisons électriquement conductrices reliant les résistances pour former le pont de jauges. Des contacts formés sur la face supérieure de la membrane permettent le raccordement du pont de jauges à une cartouche électronique (non représentée) par des conducteurs électriques 40 soudés sur ces contacts et traversant la pièce 32 en forme de disque de façon étanche.

Dans la forme de réalisation illustrée sur la figure 2, le capteur de pression différentielle 20 comprend un système de protection anti-choc intégré qui se présente sous la forme d'un tube capillaire 42 monté dans la section de relativement petit diamètre de la pièce tubulaire 30. Ce tube capillaire 42 se présente sous la forme d'un tube d'acier inoxydable traversé selon son axe par une restriction 44. Il est monté de façon démontable dans la section de relativement petit diamètre de la pièce tubulaire 30, par exemple au moyen d'un embout (non représenté) vissé à l'extrémité de la pièce 30 opposée à la pièce 32 en forme de disque. Cet embout maintient le tube capillaire 42 en appui contre un épaulement 46 formé à l'intérieur de la pièce 30.

Le caractère démontable du capillaire 42 permet de le nettoyer ou de le remplacer si nécessaire.

Les dimensions de la restriction 44, c'est-à-dire sa longueur $\ell$ et son rayon $r_c$, sont choisies en fonction des dimensions de la membrane 22 et de la nature du matériau qui la constitue, de façon à obtenir une fréquence de coupure $f_0$ autorisant les mesures de pression dans les conditions normales de fonctionnement du capteur mais interdisant la transmission à la membrane de chocs de pression susceptible d'en provoquer l'éclatement.

De façon plus précise, les forces de viscosité présentes dans la restriction 44 permettent d'assimiler celle-ci à une résistance électrique $R$ et la compliance de la membrane 22 assure le stockage d'un certain volume d'huile qui permet d'assimiler la membrane à un condensateur électrique $C$. L'ensemble constitué par le tube capillaire 42 et par la membrane déformable 22 forme donc un filtre mécanique du premier ordre comparable à un système électrique résistance $R$ - condensateur $C$. Cette assimilation permet d'écrire les équations suivantes :

$$R = \frac{(8.n.l)}{(\pi.r_c^4)} \tag{1}$$

où :

- $n$ représente la viscosité de l'huile présente dans le passage 18, à température ambiante (en Pa.s) ;
- $\ell$ représente la longueur du tube capillaire 32 (en mm) ; et
- $r_c$ représente le rayon du tube capillaire (en mm) ; et

$$C = \frac{(r_s^6)}{(8.E.e^3)} \tag{2}$$

où :

- $r_s$ représente le rayon de la partie active de la membrane 22 (en mm) ;
- $e$ représente l'épaisseur de la membrane 22 (en mm) ; et
- $E$ représente le module d'Young de la membrane 22, en Pa.

Dans un tel système, la fréquence de coupure $f_0$ est donnée par l'équation :

$$f_o = \frac{1}{(2\pi.R.C)} \qquad (3)$$

La combinaison des équations (1) (2) et (3) conduit à l'équation suivante :

$$\frac{r_c^4}{\ell} = 2.n.r_s^6 \cdot \frac{f_0}{E.e^3} \qquad (4)$$

En fixant, de la manière indiquée précédemment, la fréquence de coupure $f_0$ à une valeur comprise entre la fréquence maximale de fonctionnement normal du capteur et la fréquence maximale mécaniquement admissible pour la membrane 22, on peut donc déterminer les valeurs que peuvent prendre, pour une membrane 22 donnée, la longueur $\ell$ et le rayon $r_c$ de la restriction 44.

De façon plus précise, on donne de préférence à cette restriction 44 la longueur maximale possible, compte tenu de la place dont on dispose dans la section de plus petit diamètre de la pièce tubulaire 30, afin de pouvoir donner au rayon $r_c$ de la restriction 44 une valeur apte à être usinée mécaniquement.

A titre d'illustration, un gradiomanomètre se déplace habituellement dans un puits de forage à une vitesse suffisamment faible pour qu'une fréquence de coupure au plus égale à 100 Hz et, de préférence, voisine de 10 Hz à température ambiante assure un fonctionnement correct du capteur au cours des mesures. Le choix d'une telle fréquence de coupure permet en revanche d'éviter qu'une onde de pression résultant d'un choc mécanique ne soit appliquée sur la membrane 22. Par conséquent, tout risque d'éclatement de la membrane sous l'effet d'un choc est pratiquement évité. Cela a été confirmé par des essais montrant qu'une chute verticale de 1 m d'un gradiomanomètre incorporant un capteur de pression analogue à celui qui vient d'être décrit en se référant à la figure 2 se traduisait seulement par l'application sur le capteur d'un pic de pression d'environ $25.10^3$ Pa, sans conséquence sur l'intégrité de la membrane 22.

L'équation (4) ci-dessus montre que les dimensions de la membrane 22 constituent un paramètre clé pour la protection anti-choc de cette membrane. Ainsi, l'utilisation d'une membrane de grande dimension permet de protéger celle-ci des chocs à l'aide d'une restriction 44 dont le diamètre peut être relativement important. Dans ces conditions, le tube capillaire 42 peut être fabriqué aisément.

En revanche, lorsque les dimensions de la membrane 22 sont trop petites (par exemple, 1 mm x 1 mm), les techniques d'usinage mécanique habituelles ne permettent pas de réaliser une restriction 44 présentant une section suffisamment faible pour assurer une protection efficace de la membrane. Dans ce cas, on utilisera avantageusement la deuxième forme de réalisation de l'invention qui va à présent être décrite en se référant aux figures 3 et 4.

Dans cette deuxième forme de réalisation de l'invention, la structure générale du capteur de pression différentielle 20 est identique à celle du capteur décrit précédemment en se référant à la figure 2, sauf en ce qui concerne le système de protection anti-choc intégré. On ne fera donc qu'un bref rappel des principales pièces constituant le capteur.

Comme le montre la figure 3, le capteur de pression différentielle 20 comprend un support tubulaire rigide 28 dont la structure est la même que celle du support 28 décrit en se référant à la figure 2. La pièce 32 en forme de disque du support 28 porte également la membrane déformable 22 par l'intermédiaire d'une pièce de découplage 36. Cette pièce de découplage 36 présente une ouverture centrale 38 située en face d'un passage 34 traversant la pièce 32.

Dans cette forme de réalisation des figures 3 et 4, le système de protection anti-choc intégré est matérialisé par une plaquette de silicium 42' collée sur la face supérieure plane de la partie centrale de la pièce de découplage 35, par laquelle cette pièce est elle-même collée sur la pièce 32 en forme de disque.

Comme l'illustre à plus grande échelle la figure 4, la plaquette 42' est dépourvue de toute ouverture mais comporte sur sa face inférieure plane collée sur la face supérieure plane de la partie centrale de la pièce de découplage 36 des rainures 44' formant une restriction par laquelle l'ouverture centrale 38 de la pièce de découplage 36 communique avec l'espace formé entre cette pièce de découplage et la membrane 22. Il est à noter qu'en variante, les rainures 44' pourraient aussi être formées sur la face supérieure plane de la partie centrale de la pièce de découplage, la face inférieure plane de la plaquette 42' étant alors dépourvue de rainure.

L'usinage des rainures 44' peut être effectué selon les techniques utilisées en micro-électronique, de telle sorte que la section de passage de la restriction ainsi formée peut prendre une valeur très précise et qui ne présente pratiquement pas de limite inférieure.

Sur la figure 4, on a illustré le cas où la restriction est obtenue en réalisant deux rainures 44' orientées à 90° l'une de l'autre, coupant l'axe longitudinal du support tubulaire 28 et débouchant à chacune des extrémités de la plaquette 42'. Des rainures en nombre inférieur ou supérieur et débouchant seulement à l'une de leurs extrémités peuvent aussi être utilisées. Par ailleurs, les rainures illustrées sur la figure 4 présentent une section triangulaire, mais on comprendra aisément qu'une section différente (semi-circulaire, trapézoïdale, rectangulaire, etc.) peut être adoptée sans sortir du cadre de l'invention.

La section de passage de la restriction formée par la ou les rainures 44' est déterminée de la même manière que la section de la restriction 44 dans le mode de réalisation de la figure 2, en assimilant le ou les passages ainsi formés à un trou circulaire de rayon $r_c$ et de longueur $\ell$.

Compte tenu de la possibilité de fabriquer des rainures 44' dont la section peut être aussi faible que nécessaire, l'utilisation de la plaquette 42' est recommandée dans tous les cas où les dimensions de la membrane 22 ne permettent pas d'utiliser un tube capillaire 42 tel qu'illustré sur la figure 2.

Dans une variante de réalisation, non représentée, de la forme de réalisation qui vient d'être décrite en se référant aux figures 3 et 4, la pièce de découplage 36 est supprimée. La plaquette 42' est alors fixée directement sur la face radiale de la pièce 32 qui porte alors directement la membrane déformable 22. Plus précisément, la plaquette 42' est fixée sur le prolongement du passage 34 qui traverse la pièce 32, de telle sorte que ce passage 34 communique avec les bords périphériques de la plaquette 42' par le ou les rainures 44' formées dans cette dernière ou sur la face radiale adjacente de la pièce 32.

Comme le font apparaître les deux formes de réalisation décrites précédemment, la restriction peut être placée d'un côté ou de l'autre de la membrane, dans le passage obturé par cette dernière, et à une distance qui n'est pas impérativement très proche de la membrane.

## Revendications

1. Capteur de pression comprenant une membrane déformable (22) obturant de façon étanche un passage de fluide (18), et des moyens de mesure d'une déformation de la membrane, caractérisé par le fait que le passage (18) comprend une restriction (44,44') formant avec la membrane (22) un filtre passe-bas ayant une fréquence de coupure $f_0$ déterminée, laquelle restriction, ramenée à un trou circulaire de rayon $r_c$ (en mm) et de longueur 1 (en mm), satisfait à l'équation :

$$\frac{r_c^4}{l} = \frac{2.n.r_s^6.f_0}{E.e^3}$$

où :

- $n$ est la viscosité du fluide à température ambiante (en Pa.s) ;
- $r_s$ est le rayon utile de la membrane (en mm)
- $f_o$ est la fréquence de coupure (en Hz) adoptée pour le capteur ;
- $E$ est le module d'Young (en Pa) de la membrane ; et
- $e$ est l'épaisseur de la membrane (en mm).

2. Capteur de pression selon la revendication 1, caractérisé par le fait que la fréquence de coupure $f_o$ est comprise entre une fréquence maximale de fonctionnement normal du capteur et une fréquence maximale mécaniquement admissible pour la membrane (22).

3. Capteur de pression selon la revendication 2, caractérisé par le fait que la fréquence de coupure est au plus égale à 100 Hz.

4. Capteur de pression selon la revendication 3, caractérisé par le fait que la fréquence de coupure est voisine de 10 Hz à température ambiante.

5. Capteur de pression selon l'une quelconque des revendications précédentes, caractérisé par le fait que la membrane déformable (22) est montée dans un support tubulaire rigide (28) délimitant intérieurement une section dudit passage, dans laquelle est formée ladite restriction (44,44').

6. Capteur de pression selon la revendication 5, caractérisé par le fait que la restriction (44) est formée par un tube

# EP 0 626 572 B1

capillaire démontable (42) monté dans ladite section.

7. Capteur de pression selon la revendication 5, caractérisé par le fait que le support tubulaire rigide (28) présente une face radiale sur laquelle la membrane déformable (22) est fixée par l'intermédiaire d'une pièce de découplage (36) présentant une ouverture centrale (38) communiquant avec ladite section, une plaquette (42') étant fixée sur une partie centrale de la pièce de découplage et au moins une rainure (44') délimitant ladite restriction étant formée dans l'une des pièces formées par la plaquette (42') et la pièce de découplage (36) de façon à relier l'ouverture centrale (38) à un bord périphérique de la plaquette (42').

8. Capteur de pression selon la revendication 7, caractérisé par le fait que la membrane déformable (22), la pièce de découplage (36) et la plaquette (42') sont en silicium.

9. Capteur de pression selon la revendication 5, caractérisé par le fait que le support tubulaire rigide (28) présente une face radiale sur laquelle est fixée directement la membrane déformable (22), une plaquette (42') étant fixée sur cette face radiale, dans le prolongement de ladite section (34) du passage, et au moins une rainure (44') délimitant ladite restriction étant formée dans l'une des pièces constituées par la plaquette (42') et le support tubulaire rigide (28), de façon à relier ladite section (34) à un bord périphérique de la plaquette (42').

10. Capteur de pression selon la revendication 9, caractérisé par le fait que la membrane déformable (22) et la plaquette (42') sont en silicium.

11. Capteur de pression selon l'une quelconque des revendications précédentes, caractérisé par le fait que les moyens de mesure d'une déformation de la membrane (22) comportent un pont de jauges piézorésistives supportées par la membrane.

12. Gradiomanomètre comprenant un passage (18) rempli de liquide et dont les extrémités débouchent en deux endroits espacés l'un de l'autre, et un capteur de pression différentielle (20) placé dans ledit passage, caractérisé par le fait que le capteur de pression différentielle est conforme à l'une quelconque des revendications précédentes.

13. Gradiomanomètre selon la revendication 12, caractérisé par le fait qu'un conduit de dérivation (24), comportant un clapet (26) normalement fermé, est raccordé sur ledit passage (18), de part et d'autre du capteur de pression différentielle (20), ce clapet étant apte à souvrir sous l'effet d'un déplacement brusque du liquide dans le passage.

## Claims

1. A pressure sensor comprising a deformable diaphragm (22) closing a fluid passage (18) in sealed manner, and means for measuring deformation of the diaphragm, characterized by the fact that the passage (18) includes a restriction (44, 44') so designed as to co-operate with the diaphragm to form a lowpass filter with a determined cutoff frequency (f0), said restriction implemented as a circular orifice of radius rc (in mm) and of length 1 (in mm), satisfies the equation:

$$\frac{r_c^4}{l} = \frac{2.n.r_s^6.f_0}{E.e^3}$$

where:

- n is the viscosity of the fluid at ambient temperature (in Pa.s);
- rs is the useful radius of the diaphragm (in mm);
- f0 is the cutoff frequency (in Hz) adopted for the sensor;
- E is the Young's modulus (in Pa) of the diaphragm; and
- e is the thickness of the diaphragm (in mm).

2. A pressure sensor according to claim 2, characterized by the fact that the cutoff frequency f0 lies between a maximum frequency for normal operation of the sensor and a maximum mechanically-acceptable frequency for the diaphragm (22).

**3.** A pressure sensor according to claim 3, characterized by the fact that the cutoff frequency is equal to not more than 100 Hz.

**4.** A pressure sensor according to claim 4, characterized by the fact that the cutoff frequency is around 10yHz at ambient temperature.

**5.** A pressure sensor according to any preceding claim, characterized by the fact that the deformable diaphragm (22) is mounted in a rigid tubular support (28) delimiting a section of said passage internally, the said restriction (44, 44') being formed in this section.

**6.** A pressure sensor according to claim 6, characterized by the fact that the restriction (44) is formed by a detachable capillary tube (42) mounted in said section.

**7.** A pressure sensor according to claim 6, characterized by the fact that the rigid tubular support (28) has a radial surface on which the deformable diaphragm (22) is fixed via a decoupling part (36) with a central opening (38) communicating with said section, a small plate (42') being fixed on a central portion of the decoupling part and at least one groove defining said restriction being formed in one of the parts constituted by the small plate (42') and the decoupling part (36), in such a manner as to connect the central opening (38) to a peripheral edge of the small plate (42').

**8.** A pressure sensor according to claim 8, characterized by the fact that the deformable diaphragm (22), the decoupling part (36) and the small plate (42') are of silicon.

**9.** A pressure sensor according to claim 6, characterized by the fact that the rigid tubular support (28) has a radial surface on which the deformable diaphragm (22) is directly fixed, a small plate (42') being fixed on this radial surface in the continuation of said section (34) of the passage, and at least one groove (44') defining said restriction being formed in one of the parts constituted by the small plate (42') and the rigid tubular support (28), in such a manner as to connect said section (34) to a peripheral edge of the small plate (42').

**10.** A pressure sensor according to claim 10, characterized by the fact that the deformable diaphragm (22) and the small plate (42') are of silicon.

**11.** A pressure sensor according to any preceding claim, characterized by the fact that the means for measuring a deformation of the diaphragm (22) comprise a bridge of piezo-resistive strain gages carried by the diaphragm.

**12.** A gradiomanometer comprising a passage (18) filled with liquid and having ends that open out at two spaced-apart locations, and a differential pressure sensor (20) located in said passage, characterized by the fact that the differential pressure sensor is in conformity with any preceding claim.

**13.** A gradiomanometer according to claim 13, characterized by the fact that a bypass duct (24) with a normally-closed valve (26) is connected to said passage (18), on both sides of the differential pressure sensor (20), the valve being adapted to open in response to an abrupt displacement of the liquid in the passage.

**Patentansprüche**

**1.** Drucksensor mit einer verformbaren Membran (22), die einen Fluiddurchlaß (18) dicht verschließt, und Mitteln zum Messen einer Verformung der Membran, dadurch gekennzeichnet, daß der Durchlaß (18) eine Einschnürung (44, 44') aufweist, die mit der Membran (22) ein Tiefpaßfilter mit einer gegebenen Kappungsfrequenz $f_0$ bildet, wobei die Einschnürung, die auf ein kreisförmiges Loch mit Radius $r_c$ (in mm) und einer Länge l (in mm) reduziert ist, die folgende Gleichung erfüllt:

$$\frac{r_c^4}{l} = \frac{2 \cdot n \cdot r_s^6 \cdot f_0}{E \cdot e^3}$$

wobei:

- n die Viskosität des Fluids bei Umgebungstemperatur (in Pa · s) ist;
- $r_s$ der Nutzradius der Membran (in mm) ist;
- $f_0$ die Kappungsfrequenz (in Hz) ist, die für den Sensor verwendet wird;
- E der Elastizitätsmodul (in Pa) der Membran ist; und
- e die Stärke der Membran (in mm) ist.

2. Drucksensor nach Anspruch 1, dadurch gekennzeichnet daß die Kappungsfrequenz $f_0$ im Bereich von einer maximalen normalen Betriebsfrequenz des Sensors und einer für die Membran (22) mechanisch zulässigen Maximalfrequenz liegt.

3. Drucksensor nach Anspruch 2, dadurch gekennzeichnet, daß die Kappungsfrequenz höchstens gleich 100 Hz ist.

4. Drucksensor nach Anspruch 3, dadurch gekennzeichnet, daß die Kappungsfrequenz bei Umgebungstemperatur in der Nähe von 10 Hz liegt.

5. Drucksensor nach irgendeinem der vorangehenden Ansprüche, dadurch gekennzeichnet, daß die verformbare Membran (22) in einem starren, rohrförmigen Träger (28) angebracht ist, der innen einen Abschnitt des Durchlasses, in dem die Einschnürung (44, 44') gebildet ist, begrenzt.

6. Drucksensor nach Anspruch 5, dadurch gekennzeichnet, daß die Einschnürung (44) durch ein in dem Abschnitt angebrachtes, herausnehmbares Kapillarrohr (42) gebildet ist.

7. Drucksensor nach Anspruch 5, dadurch gekennzeichnet, daß der starre, rohrförmige Träger (28) eine radiale Stirnseite aufweist, an der die verformbare Membran (22) über ein Entkopplungsteil (36) befestigt ist, das eine mit dem Abschnitt in Verbindung stehende mittige Öffnung (38) aufweist, wobei auf einem mittigen Teil des Entkopplungsteils ein Plättchen (42') befestigt ist und wenigstens eine die Einschnürung begrenzende Rille (44') in einem der das Plättchen (42') und das Entkopplungsteil (36) umfassenden Teile gebildet ist, so daß die mittige Öffnung (38) mit einem Umfangsrand des Plättchens (42') verbunden ist.

8. Drucksensor nach Anspruch 7, dadurch gekennzeichnet, daß die verformbare Membran (22), das Entkopplungsteil (36) und das Plättchen (42') aus Silicium bestehen.

9. Drucksensor nach Anspruch 5, dadurch gekennzeichnet, daß der starre, rohrförmige Träger (28) eine radiale Stirnseite aufweist, an der die verformbare Membran (22) direkt befestigt ist, wobei an dieser radialen Fläche in der Verlängerung des Abschnitts (34) des Durchlasses ein Plättchen (42') befestigt ist und wenigstens eine die Einschnürung begrenzende Rille (44') in einem der Teile, die durch das Plättchen (42') und den starren, rohrförmigen Träger (28) gebildet sind, gebildet ist, so daß der Abschnitt (34) mit einem Umfangsrand des Plättchens (42') verbunden ist.

10. Drucksensor nach Anspruch 9, dadurch gekennzeichnet, daß die verformbare Membran (22) und das Plättchen (42') aus Silicium bestehen.

11. Drucksensor nach irgendeinem der vorangehenden Ansprüche, dadurch gekennzeichnet, daß die Mittel zum Messen einer Verformung der Membran (22) eine Brücke aus piezoresistiven Streifen, die von der Membran getragen werden, umfassen.

12. Gradiomanometer mit einem Durchlaß (18), der mit Flüssigkeit gefüllt ist und dessen Enden an zwei voneinander beabstandeten Orten einmünden, und einem Differenzdrucksensor (20), der in dem Durchlaß angeordnet ist, dadurch gekennzeichnet, daß der Differenzdrucksensor gemäß einem der vorangehenden Ansprüche gebildet ist.

13. Gradiomanometer nach Anspruch 12, dadurch gekennzeichnet, daß mit dem Durchlaß (18) beiderseits des Differenzdrucksensors (20) eine Abzweigleitung (24) verbunden ist, die eine normalerweise geschlossene Klappe (26) enthält, die sich unter der Wirkung einer plötzlichen Verschiebung der Flüssigkeit im Durchlaß öffnen kann.

FIG. 1

FIG. 2

EP 0 626 572 B1

FIG. 3

FIG. 4

13